(19) Europäisches Patentamt
European Patent Office
Office européen des brevets

(11) Publication number: **0 000 790**
**B1**

(12) **EUROPEAN PATENT SPECIFICATION**

(45) Date of publication of patent specification: **04.01.84**

(51) Int. Cl.³: **C 08 G 79/02**

(21) Application number: **78100652.3**

(22) Date of filing: **12.08.78**

(54) **Process for the production of phosphazene polymers.**

(30) Priority: **12.08.77 US 824004**

(43) Date of publication of application:
**21.02.79 Bulletin 79/4**

(45) Publication of the grant of the patent:
**04.01.84 Bulletin 84/1**

(84) Designated Contracting States:
**BE DE FR GB NL**

(56) References cited:
**DE - A - 2 708 319**
**FR - A - 1 473 887**
**FR - A - 2 074 147**
**FR - A - 2 156 306**
**GB - A - 991 201**
**US - A - 3 344 087**

**CHEMICAL ABSTRACTS, vol. 84, 1976, 136925x**

(73) Proprietor: **THE FIRESTONE TIRE & RUBBER COMPANY**
**1200 Firestone Parkway**
**Akron, Ohio 44317 (US)**

(72) Inventor: **Fieldhouse, John William**
**2454 Sunny Brook Road**
**Mogadore Ohio 44260 (US)**
Inventor: **Graves, Daniel Frank**
**7176 Cleveland-Massillon Road**
**Clinton Ohio 44216 (US)**
Inventor: **Cole, William Max**
**3750 Alberta Drive**
**Norton Ohio 44203 (US)**
Inventor: **Stayer, Mark Lutz, Jr.**
**1213 Cramer Drive**
**Suffield Ohio 44260 (US)**
Inventor: **Fenske, Steven Lee**
**1510 Plateau Street**
**Uniontown Ohio 44685 (US)**

(74) Representative: **Kraus, Walter, Dr. et al,**
**Patentanwälte Dres. Kraus & Weisert**
**Irmgardstrasse 15**
**D-8000 München 71 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Process for the production of phosphazene polymers

This invention relates to a process for producing alkoxy and/or aryloxy polyphosphazene esters represented by the general formula

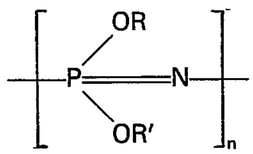

wherein R and R′ are each selected from alkyl, alkylaryl, aryl, any of which may be either substituted or unsubstituted and need not be the same, and n is an integer between 7 and 50,000 and in which some of the R or R′ groups may contain some unsaturation to facilitate curing the products;

wherein a solution of a linear dihalophosphazene represented by the formula $(NPHal_2)_n$ wherein Hal represents a halogen selected from Cl and Br and n is an integer between 7 and 50,000; is reacted under homogeneous condition, with a solution of an alkoxide or aryloxide represented by the formula $M(OR)_x$ in which M represents a metal selected from

alkali and alkaline earth metals and x is the valence of M;

and a solution of the desired ester is produced along with $M(Hal)_x$ as a by-product of the reaction, and tetrahydrofuran is used as solvent.

Phosphazene polymers of this kind are described, e.g., in US—A 3,370,020; 3,515,688; 3,700,629; 3,702,833; 3,856,712; 3,856,713; 3,853,794; 3,883,451; and 3,970,533.

In prior art descriptions of the process in which linear polydihalophosphazenes are derivatized by reaction with an alkali or alkaline earth compound represented by the general formula $M(OR)_x$ in which M represents lithium, sodium, potassium, magnesium or calcium; x is equal to the valence of M; and R represents an alkyl radical either of which may be substituted, e.g. as described in US—A 3,370,020, the esterification step (see column 3 of the patent) has usually been conducted by bringing a solution of the polydihalophosphazene dissolved in an aromatic solvent into contact with a solution of the alkoxide or aryloxide dissolved in an entirely different solvent.

Solvents for the polydihalophosphazene reactant have usually been benzene, toluene, xylene or other similar aromatic hydrocarbons which are commercially readily available and are relatively inexpensive (US—A 3,515,688 and the other above noted patents, for example).

A variety of solvents have been utilized for the alkoxide or aryloxide including: methanol disclosed in Example 2 of US—A 3,370,020; tetrahydrofuran disclosed in US—A 3,515,688, and ethers disclosed in US—A 3,883,541 noted above, but in every such reported synthesis in which the two reactants were brought together as solutions, two distinct and different solvents were utilized and the resulting derivatized product precipitates from the solutions being reacted, usually with entrapment of the metal halide by-product formed in the reaction. This results in a heterogeneous system in which the reacting solutes are in contact with each other for only limited times, with consequent adverse effect on yields of the desired esters. In addition, it has been found that complete substitution of P-Hal bonds is very difficult to achieve in a heterogeneous system, and is relatively simple to achieve in a homogeneous system.

From GB—A 991,201 it is known that the use of different solvents may give soluble products (Example 1 of this patent). Chemical Abstract vol. 84, 1976, 136925x describes a reaction in which polydichlorophosphazenes and sodium butoxide are reacted in THF, dioxane, BuOH, dioxane-BuOH or THF-BuOH mixtures. Although this article comprises the case that THF is used as a common solvent for the reactions, any general teaching as to the use of THF as common solvent for reactions as described above cannot be taken from this prior art reference. The use of THF as a common solvent in a ligand exchange procedure in the course of a process for the production of polyphosphazene polymers is described in FR-A 2,156,306. However, the reaction of this prior art reference is different from the reaction according to the present invention because the prior art reaction comprises a ligand exchange procedure. US—A 3,344,087 describes the preparation of polymeric phosphorous nitrogen compounds by a reaction of phosphonitrile halides with organic nitrogen compounds. In view of the use of different starting materials than in the present process, different end-products are obtained. Further, in the prior art process the organic nitrogen compound is used as a reactant and not in order to inhibit the formation of poly(THF). The addition of tertiary amines to tetrahydrofuran solutions of phosphonitrilic halide materials is known from FR—A 2,074,147 albeit for a different purpose as hydrohalide acceptors.

The object of this invention is to improve the process in which the halogen atoms in certain polydihalophosphaphene starting materials are replaced by alkoxy and/or aryloxy groups in the derivatization reaction as described in any of the above noted patents in which the rate of reaction is faster than in prior art heterogeneous derivatizations and in which complete substitution of the halogen atoms is more readily achieved than in such prior art processes while the specific solvent used in this

process should be stabilized against polymerization.

This object is accomplished by the invention by providing tetrahydrofuran (THF) as single common solvent for (1) the solution of said linear dihalophosphazene; (2) the solution of said alkoxide or aryloxide; and (3) the solution of said polyphosphazene; (4) the inorganic (alkali or alkaline earth) halide which is also produced in the reaction between (1) and (2) being insoluble; whereby the reaction is carried out in a homogeneous system and complete replacement of the P-Hal atoms is more readily effected than in a heterogeneous system in which a plurality of different solvents are utilized in said solutions; and adding an organic amine to the solution of the linear dihalophosphazene to inhibit the formation of poly (THF).

Thus, according to the present invention tetrahydrofuran is used as single common solvent in which all of the following are soluble:

(1) the $(NPHal_2)_n$ linear polydihalophosphazene starting material, in which Hal is either Cl or Br and n is an integer between 7 and 50,000;
(2) the $M(OR)_x$ alkoxide or aryloxide starting material with which the polydihalophosphazene reacts;
(3) the polyphosphazene derivative formed by the reaction of (1) and (2) and represented by the formula

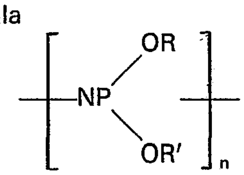

and n represents an integer from 7 to 50,000 and in which
(4) the inorganic (alkali or alkaline earth) halide which is also produced in the reaction between (1) and (2) is insoluble.

By use of THF as the solvent a homogeneous system is provided in which longer contact times are available for the reactants (1) and (2) to react, and in which separation and recovery of a plurality of solvents (necessary to the economics of the process if it is to be commercially viable) is eliminated, and in which separate recovery of the polyphosphazene derivative and the inorganic halide is simplified. Since solutions of the poly(dihalophosphazene) in THF are unstable, since as reported in US—A 3,260,684 the polydihalophosphazene may catalyze polymerization of the THF, any polymerization is avoided by the addition of certain amines to the THF. Amines which were found to inhibit the formation of poly-THF in solutions of polydihalophosphazenes in THF included diphenylamine, N-methyldiphenylamine, N-methylpyrrole, pyrrole and 6-dodecyl-1,2-dihydro-2,2,4-trimethylquinoline. Preferably the amount of amine is between 0.25 and 5.0 parts by weight for each part by weight of poly(dihalophosphazene).

The following examples are illustrative of the preferred practice of this invention and are not intended to limit the same.

A solution of linear polydichlorophosphazene $(NPCl_2)_n$ (n>7) in THF (5—10% $(NPCl_2)_n$ by weight) was prepared after the lower molecular weight cyclic oligomers had been removed from the linear polydichlorophosphazene by known purification procedures such as solvent extraction or sublimation, as described in the open literature. A small amount of an amine, e.g. diphenylamine was added to inhibit the formation of poly-tetrahydrofuran in the solution of linear polydihalophosphazene.

Sixty grams (1.03 mol) of polydichlorophosphazene in 590 g (a 9.2% solution) of tetrahydrofuran (distilled from sodium) was pressurized into a 3 liter glass reactor under nitrogen into which a solution of 584 g of 2.00 mm sodium fluoroalkoxides per gram of solution (1.17 m sodium fluoroalkoxide) had previously been charged. The contents of the reactor were stirred for three hours at 60—65°C and then cooled to 25—30°C. Excess sodium fluoroalkoxides present in the reaction mixture were then neutralized. The sodium chloride was then filtered or removed by centrifugation. The volatile tetrahydrofuran was then removed by a solvent evaporator, for reuse. Traces of fluoroalcohol were then removed at a higher temperature (100—110°C) for 20 hours at 5 mm Hg giving 130 g of a dry elastomeric poly(fluoroalkoxyphosphazene) with the following typical analysis: Dilute Solution Viscosity—2.61; % Gel—0.0: Weight Percent Sodium 0.11; Weight Percent Chloride 0.06.

Similar reactions were effected between polydibromophosphazene $(NPBr_2)_n$ and alkali metal or alkaline earth metal alkoxides, including methoxides, ethoxides, propoxides and butoxides, and/or aryloxides including alkali metal phenoxides including sodium, potassium and lithium phenoxides, both unsubstituted (e.g. $NaOC_6H_5$) and substituted (e.g. as described in US—A 3,370,020) and other aryloxides as described in said patent; in which tetrahydrofuran was the solvent for both the reactants and the desired derivatized polyphosphazene product.

## Claims

1. A process for producing alkoxy and/or aryloxy polyphosphazene esters represented by the general formula

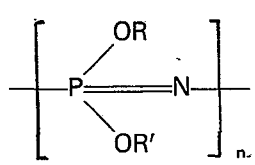

wherein R and R′ are each selected from alkyl,

alkylaryl, aryl, any of which may be either substituted or unsubstituted and need not be the same, and n is an integer between 7 and 50,000 and in which some of the R or R′ groups may contain some unsaturation to facilitate curing the products; wherein a solution of a linear dihalophosphazene represented by the formula $(NPHal_2)_n$ wherein HAl represents a halogen selected from Cl and Br and n is an integer between 7 and 50,000 is reacted under homogeneous conditions with a solution of an alkoxide or aryloxide represented by the formula $M(OR)_x$ in which M represents a metal selected from alkali and alkaline earth metals and x is the valence of M; a solution of the desired ester is produced along with $M(Hal)_x$ as a by-product of the reaction; and tetrahydrofuran is used as solvent; characterized by providing tetrahydrofuran (THF) as single common solvent for (1) the solution of said linear dihalophosphazene; (2) the solution of said alkoxide or aryloxide; and (3) the solution of said polyphosphazene; (4) the inorganic (alkali or alkaline earth) halide which is also produced in the reaction between (1) and (2) being insoluble; whereby the reaction is carried out in a homogeneous system and complete replacement of the P-Hal atoms is more readily effected than in a heterogeneous system in which a plurality of different solvents are utilized in said solutions; and adding an organic amine to the solution of the linear dihalophosphazene to inhibit the formation of poly(THF).

2. A process according to Claim 1 wherein the amine is selected from diphenylamine, N-methyldiphenylamine, N-methylpyrrole, pyrrole, and 6-dodecyl-1,2-dihydro-2,2,4-trimethylquinoline.

3. A process according to Claim 1 wherein the amine is added in an amount between 0.25 and 5.0 parts by weight for each part by weight of poly(dihalophosphazene).

4. A process according to Claim 1 wherein M is an alkali metal.

5. A process of Claim 1 wherein M is sodium.

6. A process according to Claim 1 wherein Hal is chlorine.

**Patentansprüche**

1. Verfahren zur Herstellung von Alkoxy- und/oder Aryloxyphosphazenestern der Allgemeinen Formel

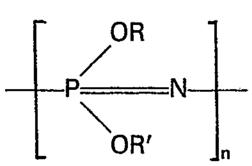

in der R und R′ aus Alkyl, Alkylaryl, Aryl, die alle entweder substituiert oder unsubstituiert sein können und nicht gleich zu sein brauchen, ausgewählt sind und n eine ganze Zahl zwischen 7 und 50 000 ist und wobei einige der Gruppen R oder R′ eine gewisse Unsättigung haben können, um das Härten der Produkte zu erleichtern, wobei eine Lösung eines linearen Dihalophosphazens der Formel $(NPHal_2)_n$, in der Hal für ein Halogen, ausgewählt aus Cl und Br, steht und n eine ganze Zahl zwischen 7 und 50 000 ist, unter homogenen Bedingungen mit einer Lösung eines Alkoxids oder Aryloxids der Formel $M(OR)_x$, wobei M ein Metall, ausgewählt aus Alkali- und Erdalkalimetallen, bedeutet und x die Wertigkeit von M darstellt, umgesetzt wird, eine Lösung des gewünschten Esters zusammen mit $M(Hal)_x$ als Nebenprodukt der Reaktion erzeugt wird, und Tetrahydrofuran als Lösungsmittel verwendet wird, dadurch gekennzeichnet, daß man Tetrahydrofuran (THF) als einziges gemeinsames Lösungsmittel für (1) die Lösung des linearen Dihalophosphazens, (2) die Lösung des Alkoxids oder Aryloxids und (3) die Lösung des Polyphosphazens verwendet, wobei (4) das anorganische (Alkali- oder Erdalkali-) Halogenid, das ebenfalls bei der Reaktion zwischen (1) und (2) gebildet ist, unlöslich ist, wobei die Reaktion in einem homogenen System durchgeführt wird und ein vollständiger Austausch der P-Hal-Atome leichter bewirkt wird als in einem heterogenen System, in dem eine Vielzahl von verschiedenen Lösungsmitteln in den genannten Lösungen verwendet wird, und wobei man ein organisches Amin zu der Lösung des linearen Dihalophosphazens zusetzt, um die Bildung von Poly(THF) zu hemmen.

2. Verfahren nach Anspruch 1, dadurch gekennzeichnet, daß man das Amin aus Diphenylamin, N-Methyldiphenylamin, N-Methylpyrrol, Pyrrol und 6-Dodecyl-1,2-dihydro-2,2,4-trimethylchinolin auswählt.

3. Verfahren nach Anspruch 1, dadurch gekennzeichnet, daß man das Amin in einer Menge zwischen 0,25 und 5,0 Gewichtsteilen für jeden Gewichtsteil Poly(dihalophosphazen) zusetzt.

4. Verfahren nach Anspruch 1, dadurch gekennzeichnet, daß M ein Alkalimetall ist.

5. Verfahren nach Anspruch 1, dadurch gekennzeichnet, daß M für Natrium steht.

6. Verfahren nach Anspruch 1, dadurch gekennzeichnet, daß Hal für Chlor steht.

**Revendications**

1. Procédé de production d'esters d'alkoxy-et/ou d'aryloxy-polyphosphazènes représentés par la formule générale

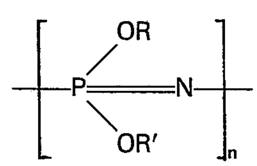

dans laquelle R et R′ sont tous deux choisis entre des restes alkyle, alkylaryle, aryle, l'un quelconque pouvant être substitué ou non substitué et les deux n'étant pas nécessairement les mêmes, et *n* est un nombre entier compris entre 7 et 50 000, certains des groupes R ou R' pouvant contenir une certaine insaturation pour faciliter la réticulation des produits; dans lequel une solution d'un dihalogénophosphazène linéaire représenté par la formule $(NPHal_2)_n$, dans laquelle Hal représente un halogène choisi entre Cl et Br et *n* est un nombre entier de 7 à 50 000, est amenée à réagir dans des conditions homogènes avec une solution d'un alcoolate ou d'un arylate représenté par la formule $M(OR)_x$ dans laquelle M représente un métal choisi entre des métaux alcalins et alcalino-terreux et *x* est la valence de M; une solution de l'ester désiré est produite en même temps qu'un composé $M(Hal)_x$ comme sous-produit de le réaction; et le tétrahydrofuranne est utilisé comme solvant; caractérisé en ce qu'on choisit le tétrahydrofuranne (THF) comme unique solvant commun (1) à la solution dudit dihalogénophosphazène linéaire; (2) à la solution dudit alcoolate ou arylate; et (3) à la solution dudit polyphosphazène; (4) l'halogénure inorganique (de métal alcalin ou alcalino-terreux) qui est également produit dans la réaction entre (1) et (2) étant insoluble; en sorte que la réaction est conduite dans un système homogène et que le remplacement total des atomes de Hal liés à P est plus aisément effectué que dans un système hétérogène dans lequel plusieurs solvants différents sont utilisés dans lesdites solutions; et on ajoute une amine organique à la solution du dihalogénophosphazène linéaire pour inhiber la formation de poly(THF).

2. Procédé suivant la revendication 1, dans lequel l'amine est choisie entre la diphénylamine, la N-méthyldiphénylamine, le N-méthylpyrrole, le pyrrole et la 6-dodécyl-1,2-dihydro-2,2,4-triméthylquinoléine.

3. Procédé suivant la revendication 1, dans lequel l'amine est ajoutée en une quantité comprise entre 0,25 et 5,0 parties en poids par partie en poids de poly(dihalogénophosphazène).

4. Procédé suivant la revendication 1, dans lequel M est un métal alcalin.

5. Procédé suivant la revendication 1, dans lequel M est le sodium.

6. Procédé suivant la revendication 1, dans lequel Hal est le chlore.